# DEMANDE DE BREVET EUROPEEN

(11) **EP 2 103 494 A1**
(43) Date de publication de la demande: **23.09.2009**
(21) Numéro de dépôt: 09155659.7
(22) Date de dépôt: 19.03.2009
(51) Int. Cl.: B60T 8/40, B60T 13/74

(54) **Système de contrôle de stabilité et de trajectoire d'un véhicule automobile utilisant un servofrein actif**

(30) Priorité: 20.03.2008 FR 0851828
(71) Demandeur: PEUGEOT CITROËN AUTOMOBILES S.A., 78140 Vélizy Villacoublay (FR)
(72) Inventeur: Zink, Eric, 92700, Colombes (FR); Blanc, Fabrice, 38080, L'Isle d'Abeau (FR)

(57) **Abrégé**

L'invention se rapporte à un système de contrôle de stabilité et de trajectoire d'un véhicule automobile, apte à moduler individuellement la pression hydraulique alimentant chacun de quatre éléments de frein (7a,7b,7c,7d) associés aux roues d'un véhicule automobile et comprenant :
- un maître cylindre tandem (3) alimentant individuellement deux circuits deux freinage (C₁,C₂), chaque circuit de freinage alimentant deux éléments de frein ;
- un servofrein (2) destiné à agir sur le maître cylindre (3), apte à moduler un effort reçu de la pédale de commande de frein (1) et à générer un effort en l'absence d'action sur la pédale (1) de commande ;
- une électrovanne (6a,6b,6c,6d) d'isolement normalement ouverte associée à chacun des éléments de frein ;
le système étant apte à augmenter ou diminuer la pression individuellement dans un ou plusieurs éléments de frein (7a,7b,7c,7d) par actionnement de la (des) électrovanne(s) d'isolement (6a,6b,6c,6d) associée(s) à (aux) l'élément(s) de frein non concerné(s) conjointement à l'utilisation du servofrein (2).
L'invention concerne également un procédé pour mettre en oeuvre un tel système, ainsi qu'un véhicule automobile pourvu d'un tel système ou mettant en oeuvre le procédé.

## Description

La présente invention est relative à un système de contrôle de stabilité et de trajectoire pour un véhicule automobile.

Un système de contrôle de stabilité et de trajectoire, connu notamment sous le nom d'E.S.P., a pour objectif d'augmenter ou de générer le couple de freinage appliqué à une roue si une unité de contrôle électronique en charge de la commande du système détecte qu'une consigne conducteur est inexistante, insuffisante ou au contraire trop importante, au regard d'une situation de stabilité du véhicule, cette situation étant déterminée à partir de mesures effectuées par différents capteurs installés dans le véhicule.

L'action principale d'un système de contrôle de stabilité consiste donc à augmenter ou générer un couple de freinage si la consigne du conducteur appliquée à la pédale de frein est insuffisante ou inexistante

Parallèlement, il est également connu des systèmes d'anti-blocage des roues lors d'un freinage (couramment appelé A.B.S). Le système A.B.S. permet de conserver la dirigeabilité du véhicule en situation de freinage d'urgence ou sur revêtement à faible adhérence. A cet effet, un capteur de vitesse est disposé au niveau de chaque roue. A partir de ces mesures de vitesse, un calculateur évalue le glissement relatif de chaque roue et régule la puissance du freinage sur chacune des roues de façon à empêcher le blocage de l'une d'entre elles.

Les moyens de calcul et de régulation du système de contrôle de stabilité et de trajectoire sont en outre couramment employés afin de réaliser un système d'anti-patinage (couramment appelé A.S.R.).

Les systèmes de contrôle de stabilité et de motricité existants sont des systèmes hydrauliques se greffant sur le (les) circuit(s) de freinage du véhicule, et, le cas échéant, constituent un système unique assurant les fonctions de contrôle de stabilité, d'antiblocage et d'anti-patinage.

De tels systèmes équipent aujourd'hui couramment les véhicules de moyenne et haute gammes, mais, en raison d'un surcoût important, sont encore peu installés sur les véhicules d'entrée de gamme, en dépit de leur apport incontestable en terme de sécurité.

Atténuer l'impact économique de l'intégration d'un système de contrôle de stabilité dans un véhicule automobile constitue ainsi un enjeu primordial pour les constructeurs automobiles.

Le surcoût important de ces systèmes est, pour la plus grande part, dû à la partie opérative, comprenant des composants hydrauliques dont l'intégration s'avère coûteuse et complexe, comme expliqué ci-après.

Le système de freinage d'un véhicule dépourvu de système de régulation comporte, de manière connue, un circuit hydraulique permettant d'actionner des étiers de frein équipant chacun des disques de frein dont est pourvue chacune des roues (éventuellement remplacés par un ensemble tambour/mâchoire). Le circuit hydraulique est mis en pression lorsque le conducteur exerce un effort sur la pédale de frein au moyen d'un maître-cylindre alimenté par un réservoir de fluide. Les exigences règlementaires de sécurité imposent de prévoir deux circuits de freinage indépendants, chaque circuit assurant le freinage de deux roues, par exemple, une roue avant et une roue arrière de côté opposé. On utilise à cet effet un maître-cylindre dit « tandem », comportant deux chambres de compression alimentant chacune un des deux circuits. Entre le maître-cylindre et la pédale est interposé un dispositif d'amplification, le servofrein (aussi connu sous le nom de « booster »).

L'implantation d'un système de contrôle de stabilité et de trajectoire sur un tel système de freinage impose généralement la présence sur chacun des deux circuits de freinage d'une pompe, d'une électrovanne, ouverte en position de repos, permettant d'isoler le maître-cylindre tandem du circuit hydraulique, d'une électrovanne d'aspiration, fermée en position de repos, installée entre le maître-cylindre tandem et la pompe (côté admission), d'électrovannes d'admission et d'échappement pour chacun des étriers, ainsi que d'un accumulateur basse pression.

L'un des éléments les plus coûteux de cet ensemble est la pompe hydraulique et il est connu du document DE10338046 d'utiliser un servofrein « actif » afin d'effectuer les régulations nécessaires en cas d'action insuffisante ou inexistante de la part du conducteur (ESP, ASR...). Le terme de servofrein actif est utilisé ici par opposition au servofrein classique, décrit plus haut, qui est uniquement apte à amplifier un effort non nul, mais ne peut en aucun cas générer un effort si le conducteur n'appuie pas sur la pédale. Cependant, le système décrit dans ce document conserve un bloc hydraulique conventionnel, c'est-à-dire comprenant au moins une pompe hydraulique, pour toutes les actions nécessitant de diminuer l'effort imposé par le conducteur, et donc la pression dans le circuit hydraulique (i.e. pour l'ABS).

La présente invention a pour objet de pallier les inconvénients de l'art antérieur en proposant un système et un procédé de contrôle de la stabilité, de la trajectoire et de l'adhérence d'un véhicule fonctionnant sans pompe hydraulique, quelle que soit l'action de régulation envisagée : augmentation, diminution ou génération d'une pression de freinage.

Ainsi, l'invention concerne un système de contrôle de stabilité et de trajectoire d'un véhicule automobile, apte à moduler individuellement la pression hydraulique alimentant chacun de quatre éléments de frein associés aux quatre roues d'un véhicule automobile et comprenant :
- un maître cylindre tandem alimentant individuellement deux circuits deux freinage, chaque circuit de freinage alimentant deux éléments de frein ;
- un servofrein destiné à agir sur le maître cylindre, apte à moduler un effort reçu de la pédale de commande de frein et à générer un effort en l'absence d'action sur la pédale de commande ;
- une électrovanne d'isolement normalement ouverte associée à chacun des éléments de frein ;

le système étant apte à augmenter ou diminuer la pression individuellement dans un ou plusieurs éléments de frein par actionnement de la (des) électrovanne(s) d'isolement associée(s) à (aux) l'élément(s) de frein non concerné(s) conjointement à l'utilisation du servofrein.

Selon une réalisation, le système, permettant de réaliser une fonction d'antiblocage des roues, est apte à détecter le risque de blocage d'une ou plusieurs roues lors d'un freinage, à isoler la(les) roue(s) non bloquées au moyen des électrovannes d'isolement associées, puis à diminuer l'effort d'assistance fourni par le servofrein pour débloquer la(les) roue(s).

Selon une réalisation, le système, permettant de réaliser une fonction de contrôle de stabilité et de trajectoire, est apte à générer un effort de freinage individuellement dans une ou plusieurs roue(s) en isolant les autres roues en activant les électrovannes d'isolement associées puis à activer le servofrein pour générer un effort de freinage et ralentir la rotation de la (les) roue(s).

Selon une réalisation, le servofrein est un actionneur électromécanique réversible.

Selon une réalisation, le servofrein est un actionneur électromécanique irréversible, le servofrein étant lié à la pédale par un mécanisme d'accouplement.

Selon une réalisation, au moins une des électrovannes est une électrovanne de type proportionnel.

Selon une réalisation, au moins l'un des deux circuits de freinage comporte un capteur de pression hydraulique.

Selon une réalisation, le système comprend un capteur d'effort associé à la pédale de commande de frein.

Selon une réalisation, le système comprend un capteur de position associé à la pédale de commande de frein.

Selon une réalisation, chaque circuit de freinage comprend un accumulateur haute pression.

Selon une réalisation, le système comprend un simulateur de course et d'effort relié à la pédale de frein.

L'invention concerne en outre un procédé mettant en oeuvre le système de freinage selon l'invention, comprenant les étapes de :
- surveiller les vitesses de rotation des roues ;
- mémoriser la pression mesurée par le capteur lorsqu'une roue se bloque ;
- activer les électrovannes d'isolement des roues non bloquées ;
- réduire l'effort d'assistance fourni par le servofrein jusqu'à ce que la roue bloquée se débloque ; puis activer l'électrovanne d'isolement associée ;
- augmenter l'effort d'assistance du servofrein jusqu'à atteindre à nouveau la pression mémorisée ;
- désactiver les électrovannes d'isolement des roues non bloquées.

Selon une mise en oeuvre, le procédé comprend les étapes de :
- lorsqu'un écart survient entre les trajectoires réelle et souhaitée, déterminer une roue devant être freinée pour diminuer cet écart, ainsi que l'effort de freinage à appliquer à cette roue ;
- activer les électrovannes d'isolement des autres roues ;
- activer le servofrein (2) pour générer l'effort de freinage nécessaire sur la roue (8a) ;
- lorsque l'écart entre les trajectoires réelle et souhaitée est corrigé, désactiver le servofrein (2) ;
- désactiver les électrovannes d'isolement (6b, 6c, 6d) des roues non bloquées (8b, 8c, 8d).

L'invention concerne également un véhicule automobile pourvu d'un système selon l'invention.

L'invention concerne également un véhicule automobile mettant en oeuvre le procédé selon l'invention.

Un exemple de réalisation de l'invention est décrit ci-après, de manière non limitative, en relation avec les figures annexées, parmi lesquelles :
- la figure 1 montre un schéma d'un système selon l'invention;
- les figures 2 et 3 montrent l'état du système de la figure 1, respectivement lors de phases classiques de freinage et de défreinage;
- la figure 4 montre l'état du système de la figure 1 lors d'une phase de freinage nécessitant la mise en oeuvre de la fonction d'antiblocage ;
- la figure 5 montre les étapes de mise oeuvre de la fonction d'antiblocage ;
- la figure 6 montre l'état du système de la figure 1 lors d'une phase de mise en oeuvre de la fonction de contrôle de stabilité.

Les éléments identiques conservent la même référence d'une figure à l'autre.

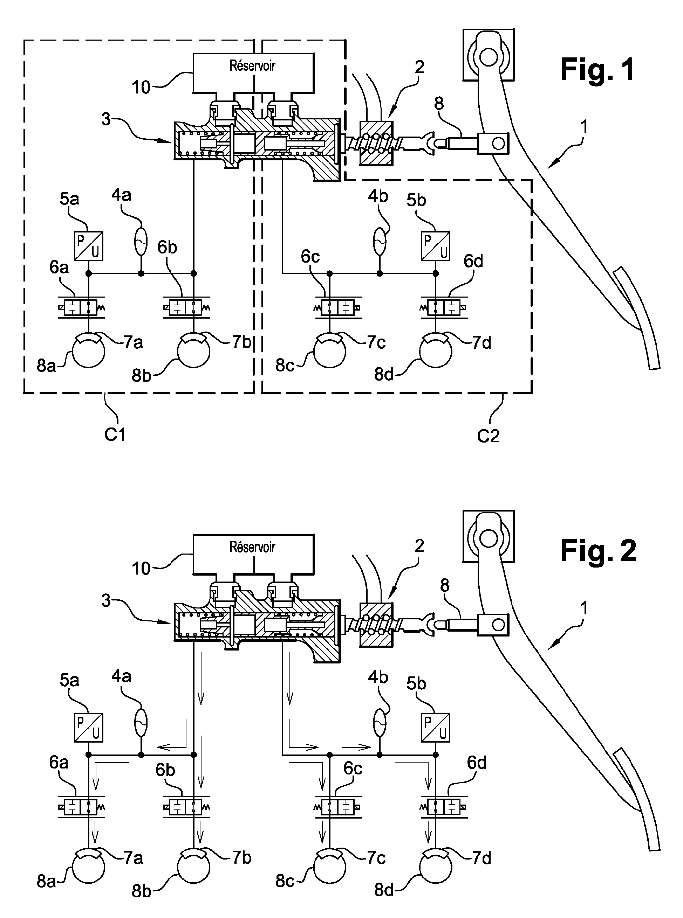

La figure 1 représente un schéma de principe d'un système selon l'invention. Un maître cylindre tandem 3 relié à un réservoir 10 de fluide hydraulique permet d'alimenter deux circuits de freinage indépendants et identiques C₁ et C₂. Chacun des circuits de freinage est associé à deux des quatre roues représentées ici par leur de disque de frein 8a, 8b, 8c, 8d et permet d'actionner deux étriers des quatre étriers respectifs 7a, 7b, 7c, 7d. A chaque étrier est associée une électrovanne d'isolement normalement ouverte, dans l'exemple quatre électrovannes proportionnelles 6a, 6b, 6c, 6d. Au moins l'un des circuits de freinage C₁ et C₂ est en outre équipé d'un capteur de pression. Dans l'exemple de la figure 1, chaque circuit comporte un capteur de pression 5a, 5b propre.

Dans des variantes de réalisation, les électrovannes 6a, 6b, 6c, 6d peuvent être de type tout-ou-rien. Une électrovanne tout ou rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Le maître cylindre 3 est actionné par un servofrein actif réversible 2 relié à une pédale de frein 1. Le servofrein 2 est un actionneur électromécanique réversible qui permet d'amplifier l'effort reçu de la pédale de frein 1, comme un servofrein classique, mais peut également amoindrir cet effort (création d'un effort résistant) ou encore générer seul un effort en l'absence d'action sur la pédale de frein de la part du conducteur. L'effort reçu de la pédale est mesuré grâce à un capteur d'effort 8. Par réversible, on entend que l'actionneur ne s'oppose pas au mouvement de la pédale de frein lorsque celui-ci n'est pas alimenté. En variante, on peut envisager l'utilisation d'un actionneur irréversible en combinaison avec un système d'accouplement débrayable, afin que, pour des raisons de sécurité il soit toujours possible de freiner, notamment lorsque l'actionneur tombe en panne.

On décrit ci-après le fonctionnement du système selon l'invention à travers les phases de freinage et défreinage classiques, ainsi qu'à travers des phases de régulation du système de contrôle de stabilité et de trajectoire.

Ainsi, la figure 2 montre les mouvements de fluide hydraulique dans le circuit lors d'un freinage classique. Lorsque le conducteur appuie sur la pédale 1, le servofrein 2 amplifie cet effort et transmet l'effort résultant au maître cylindre 3. La pression générée par le maître cylindre 3 est transmise par les électrovannes 6a, 6b, 6c, 6d normalement ouvertes aux étriers 7a, 7b, 7c, 7d. De manière classique, la pression reçue par les étriers est convertie en effort de freinage.

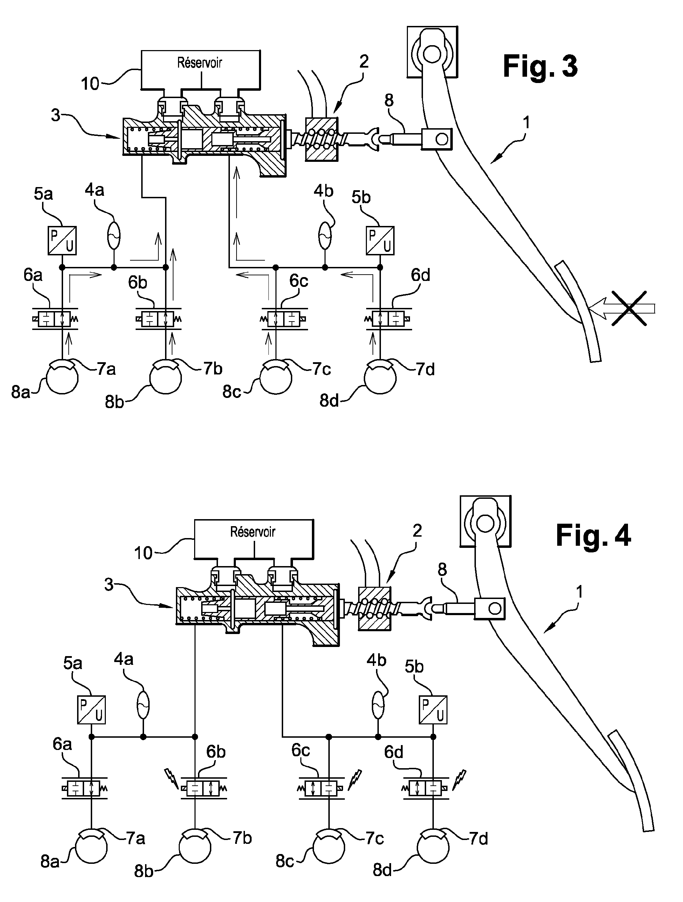

La figure 3 montre l'état du circuit lors d'une phase de défreinage, c'est-à-dire lorsque le conducteur relâche la pédale de frein à l'issue d'une phase de freinage. A cet instant, le fluide contenu sous pression dans les étriers 7a, 7b, 7c, 7d reflue vers le maître cylindre 3 à travers les électrovannes 6a, 6b, 6c, 6d qui sont passantes.

La figure 4 montre le circuit lors d'une phase de régulation du système selon l'invention, dans laquelle il est nécessaire de faire chuter la pression dans un seul étrier, par exemple lorsqu'une roue se bloque lors d'une phase de freinage. Lorsqu'un risque de blocage d'une roue est détecté dans l'exemple de la figure 4, la roue correspondant au disque 8a et son étrier associé 7a, le calculateur non représenté qui contrôle le système mémorise la pression mesurée à l'aide des capteurs 5a, 5b. Les électrovannes d'isolement 6b, 6c, 6d des étriers 7b, 7c, 7d des roues non bloquées sont alors activées i.e. fermées. La pression des étriers ainsi isolés est donc maintenue constantes tant que les électrovannes 6b, 6c, 6d associées ne sont pas désactivées. Parallèlement l'effort d'assistance fourni par le servofrein 2 est réduit, ce qui a pour effet de diminuer la pression de l'étrier 7a de la roue bloquée correspondant au disque 8a. Lorsque la roue se débloque, l'électrovanne d'isolement 6a est activée afin de maintenir la pression constante dans l'étrier 7a, tandis que l'effort d'assistance du servofrein 2 est relevé jusqu'à revenir à la pression mémorisée. Lorsque cette pression est atteinte, les électrovannes d'isolement des trois autres roues sont rouvertes.

L'information issue du capteur d'effort 8 permet de conserver la cohérence entre les pressions régulées par le servofrein 2 et la consigne du conducteur. Un « programme de surveillance » estime quelle pression de consigne correspond au souhait du conducteur à partir de l'effort mesuré par le capteur 8, et s'assure par exemple qu'en dehors des phases de fonctionnement nécessitant une pression de freinage indépendamment de l'action du conducteur les pressions des étriers ne dépassent pas cette pression de consigne.

La volonté du conducteur peut également être estimée en utilisant la pression mesurée par les capteurs de pression 5a, 5b et en connaissant le rapport d'assistance que fournit le servofrein 2.

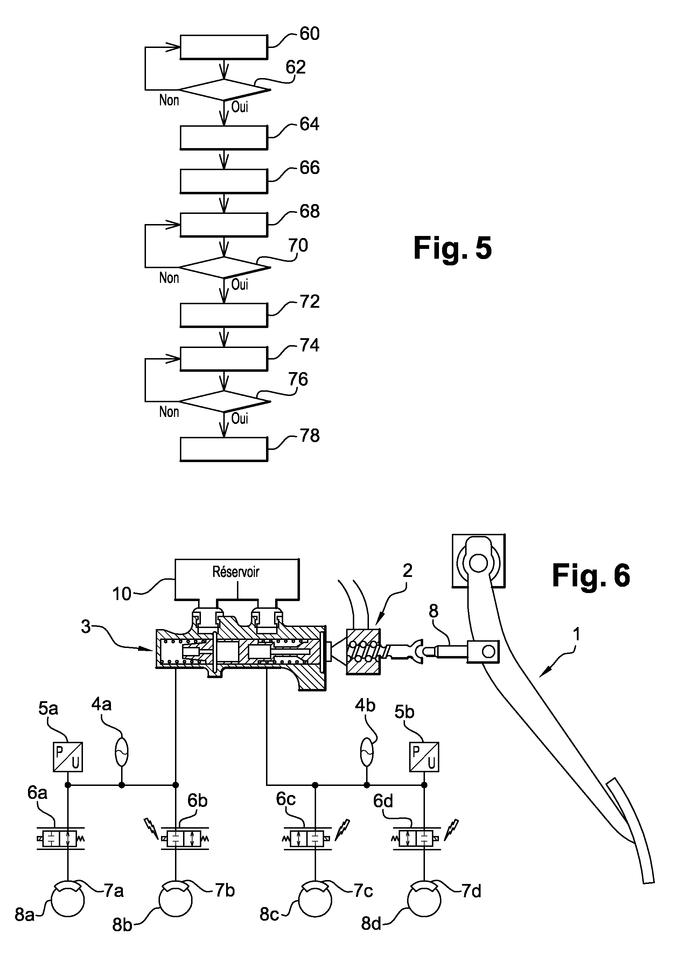

La figure 5 est un ordinogramme détaillant les étapes du procédé selon l'invention pour ce qui concerne la partie antiblocage ou plus généralement de diminution de pression. L'étape 60 de surveillance des vitesses de chacune des roues est réalisée en permanence. Lorsqu'une roue se bloque, par exemple la roue correspondant au disque 8a, la pression mesurée par les capteurs 5a, 5b est mémorisée étape 64. Les électrovannes d'isolement des trois roues non bloquées 6b, 6c, 6d sont activées étape 66, et l'effort d'assistance fourni par le servofrein est réduit étape 68 jusqu'à obtenir le déblocage de la roue correspondant au disque 8a étape 70. Lorsque la roue correspondant au disque 8a est débloquée l'électrovanne correspondante 6a est activée étape 72 puis l'effort d'assistance sur servofrein 2 est augmenté étape 74 jusqu'à ce que la pression mesurée par les capteurs 5a, 5b soit de nouveau égale à la pression mémorisée à l'étape 64. Lorsque cette pression est atteinte, les électrovannes d'isolement 6b, 6c, 6d des trois roues non bloquées sont désactivées.

La figure 6 montre l'état du circuit lors d'une phase de régulation nécessitant une pression de freinage sans action du conducteur, ou avec une action du conducteur insuffisante. Cela correspond notamment à des phases d'actionnement de l'ESP. Dans ce cas, si la pression mesurée par les capteurs 5a, 5b est inférieure à la pression requise, le servofrein 2 est activé et génère ainsi directement la pression requise. Si, lors de cette phase, le conducteur appuie finalement sur la pédale de frein ou augmente suffisamment la pression qu'il exerçait, l'effort que le conducteur exerce sur la pédale s'ajoute alors à l'effort déjà fourni par le servofrein 2.

Dans une variante, le système comprend un capteur de déplacement associé à la pédale de frein 1. Ainsi l'information sur la position de la pédale, ou la dérivée temporelle de celle-ci permet de réaliser des fonctions supplémentaires en faisant varier la loi d'assistance qui est assurée par le servofrein 2. Par exemple, on peut réaliser la fonction d'aide au freinage d'urgence, dans laquelle on détecte un enfoncement très brusque de la pédale de frein et l'on augmente l'effort d'assistance du servofrein 2 par rapport à l'effort d'assistance nominal. En l'absence de capteur de déplacement, on peut cependant utiliser comme information le gradient de la force appliquée par le conducteur sur la pédale de frein 1 pour réaliser la fonction d'aide au freinage d'urgence.

Dans une variante, chacun des circuits de freinage comporte un accumulateur haute pression 4a, 4b qui permettent d'amortir les à coups dans le circuit lorsque le fluide hydraulique reflue, par exemple lors d'une phase de régulation antiblocage. Ces accumulateurs doivent pouvoir supporter la pression maximale admissible dans les étriers.

Dans une variante, la pédale de frein est reliée à un simulateur de course et d'effort comme il en a été développé pour les systèmes de freinage des véhicules hybrides par exemple. L'utilisation d'un tel simulateur permettrait d'améliorer le ressenti à la pédale du conducteur lors des phases de régulation de pression par l'intermédiaire du servofrein.

Dans les modes de réalisation décrits, les éléments de frein sont des freins à disque. Toutefois, ces éléments de frein pourraient en variante être remplacés par des freins à tambour.

## Revendications

1. Système de contrôle de stabilité et de trajectoire d'un véhicule automobile, apte à moduler individuellement la pression hydraulique alimentant chacun de quatre éléments de frein (7a, 7b, 7c, 7d) associés aux quatre roues d'un véhicule automobile et comprenant :
- un maître cylindre tandem (3) alimentant individuellement deux circuits deux freinage (C₁, C₂), chaque circuit de freinage alimentant deux éléments de frein ;
- un servofrein (2) destiné à agir sur le maître cylindre (3), apte à moduler un effort reçu de la pédale de commande de frein (1) et à générer un effort en l'absence d'action sur la pédale (1) de commande ;
- une électrovanne (6a, 6b, 6c, 6d) d'isolement normalement ouverte associée à chacun des éléments de frein ;
le système étant apte à augmenter ou diminuer la pression individuellement dans un ou plusieurs éléments de frein (7a, 7b, 7c, 7d) par actionnement de la (des) électrovanne(s) d'isolement (6a, 6b, 6c, 6d) associée(s) à (aux) l'élément(s) de frein non concerné(s) conjointement à l'utilisation du servofrein (2).

2. Système selon la revendication 1, permettant de réaliser une fonction d'antiblocage des roues (8a, 8b, 8c, 8d), le système étant apte à détecter le risque de blocage d'une ou plusieurs roues (8a) lors d'un freinage, à isoler la(les) roue(s) (8b, 8c, 8d) non bloquées au moyen des électrovannes d'isolement associées (6b, 6c, 6d), puis à diminuer l'effort d'assistance fourni par le servofrein (2) pour débloquer la(les) roue(s) (8a).

3. Système selon la revendication 1 ou 2, permettant de réaliser une fonction de contrôle de stabilité et de trajectoire, le système étant apte à générer un effort de freinage individuellement dans une ou plusieurs roue(s) en isolant les autres roues (8b, 8c, 8d) en activant les électrovannes d'isolement associées (6b, 6c, 6d) puis à activer le servofrein (2) pour générer un effort de freinage et ralentir la rotation de la (les) roue(s) (8a).

4. Système selon l'une des revendications 1 à 3, dans lequel le servofrein (2) est un actionneur électromécanique réversible.

5. Système selon l'une des revendications 1 à 3, dans lequel le servofrein (2) est un actionneur électromécanique irréversible, le servofrein (2) étant lié à la pédale par un mécanisme d'accouplement.

6. Système selon l'une des revendications 1 à 5, dans lequel au moins une des électrovannes (6a, 6b, 6c, 6d) est une électrovanne de type proportionnel.

7. Système selon l'une des revendications 1 à 6, dans lequel au moins l'un des deux circuits de freinage (C₁, C₂) comporte un capteur de pression hydraulique (5a, 5b).

8. Système selon l'une des revendications 1 à 7, comprenant un capteur d'effort (8) associé à la pédale de commande de frein (1).

9. Système selon l'une des revendications 1 à 8, comprenant un capteur de position associé à la pédale de commande de frein (1).

10. Système selon l'une des revendications 1 à 9, dans lequel chaque circuit de freinage (C₁, C₂) comprend un accumulateur (4a, 4b) haute pression.

11. Système selon l'une des revendications 1 à 10, comprenant un simulateur de course et d'effort relié à la pédale de frein

12. Procédé mettant en oeuvre le système selon l'une des revendications 1 à 11, comprenant les étapes de :
- surveiller les vitesses de rotation des roues (8a, 8b, 8c, 8d) ;
- mémoriser la pression mesurée par le capteur (5a, 5b) lorsqu'une roue (8a) se bloque ;
- activer les électrovannes d'isolement (6b, 6c, 6d) des roues non bloquées (8b, 8c, 8d) ;
- réduire l'effort d'assistance fourni par le servofrein (2) jusqu'à ce que la roue bloquée (8a) se débloque ; puis activer l'électrovanne d'isolement (6a) associée ;
- augmenter l'effort d'assistance du servofrein (2) jusqu'à atteindre à nouveau la pression mémorisée ;
- désactiver les électrovannes d'isolement (6b, 6c, 6d) des roues non bloquées (8b, 8c, 8d).

13. Procédé selon la revendication 12, comprenant les étapes de :
- lorsqu'un écart survient entre les trajectoires réelle et souhaitée, déterminer une roue (8a) devant être freinée pour diminuer cet écart, ainsi que l'effort de freinage à appliquer à cette roue (8a) ;
- activer les électrovannes d'isolement (6b, 6c, 6d) des autres roues (8b, 8c, 8d) ;
- activer le servofrein (2) pour générer l'effort de freinage nécessaire sur la roue (8a) ;
- lorsque l'écart entre les trajectoires réelle et souhaitée est corrigé, désactiver le servofrein (2) ;
- désactiver les électrovannes d'isolement (6b, 6c, 6d) des roues non bloquées (8b, 8c, 8d).

14. Véhicule automobile pourvu d'un système selon l'une des revendications 1 à 11.

15. Véhicule automobile mettant en oeuvre le procédé selon la revendication 12 ou 13.
